Europäisches Patentamt

European Patent Office

Office européen des brevets

(11) Veröffentlichungsnummer: **0 150 494**
A2

# EUROPÄISCHE PATENTANMELDUNG

(21) Anmeldenummer: **84116269.6**

(22) Anmeldetag: **22.12.84**

(51) Int. Cl.⁴: **G 06 K 7/10**

(30) Priorität: **11.01.84 DE 3400664**

(43) Veröffentlichungstag der Anmeldung: **07.08.85**
**Patentblatt 85/32**

(84) Benannte Vertragsstaaten: **AT CH DE LI NL**

(71) Anmelder: **ROBERT BOSCH GMBH, Postfach 50, D-7000 Stuttgart 1 (DE)**

(72) Erfinder: **Howind, Gerhard, Schmiedelerstrasse 8, D-3210 Elze (DE)**
Erfinder: **Messerschmidt, Rudolf, Ing.grad., Gartenstrasse 2, D-3226 Sibbesse (DE)**

(54) **Strichcodeleser.**

(57)  Es wird ein Strichcodeleser vorgeschlagen, der zur Aufnahme von Strichcodes geeignet ist. Der Strichcodeleser umfaßt einen Sender für einen Lichtstrahl und einen Empfänger zur Auswertung des reflektierten Lichtstrahls. Zur Verbesserung der Lesbarkeit wurde im Strahlengang an der Spitze des Strichcodelesers eine Streuscheibe angeordnet, so daß auch unter schwierigen Verhältnissen eine Detektion des Strichcodes möglich ist.

R. **19151**

29.11.1983 Fd/Le

ROBERT BOSCH GMBH, 7000 STUTTGART 1

— 1 —

Strichcodeleser

Stand der Technik

Die Erfindung geht aus von einem Strichcodeleser nach der Gattung des Hauptanspruchs. Strichcodeleser sind bereits allgemein bekannt und dienen insbesondere zur Dateneingabe mittels bestimmter Codes, die in Form von unterschiedlich breiten Strichen gekennzeichnet sind. Solche Codes sind beispielsweise auf Waren zu finden. Es wurde auch schon vorgeschlagen, Programme von Rundfunk und Fernsehen in Zeitschriften und Zeitungen damit zu kennzeichnen. Zur Aufnahme solcher Strichcodes dienen Strichcodeleser die beispielsweise von der Firma Hewlett & Packard unter der Bezeichnung HEDS 3000 auf den Markt gebracht werden. Es hat sich nunmehr gezeigt, daß bei der Auswertung der Strichcodes Schwierigkeiten auftreten, wenn der Strichcodes selbst auf einer zu glänzenden Unterlage aufgedruckt ist oder wenn starke Unregelmäßigkeiten im Druck vorliegen. Schwierigkeiten gab es ebenfalls, wenn    die Seite mit Strichcode beispielsweise in einer Zeitschrift bereits stark verknittert war.

...

Vorteile der Erfindung

Der erfindungsgemäße Strichcodeleser mit den kennzeichnenden Merkmalen des Hauptanspruchs hat demgegenüber
den Vorteil, daß auch bei ungünstigen Gegebenheiten eine
einwandfreie Detektion des Strichcodes möglich ist.
Als weiterer Vorteil ist anzusehen, daß die erfindungsgemäße Maßnahme einfach und kostengünstig zu realisieren
ist.

Durch die in den Unteransprüchen aufgeführten Maßnahmen
sind vorteilhafte Weiterbildungen und Verbesserungen
des im Hauptanspruch angegebenen Strichcodesensor möglich. Die Streuscheibe läßt sich besonders einfach
realisieren, wenn sie einseitig aufgerauht ist, was beispielsweise mittels eines Schleifpapieres geschehen
kann. Besonders vorteilhaft ist, die Aufrauhung auf
der Innenseite der Streuscheibe aufzubringen, da
dann eine Abnutzung der Aufrauhung nicht gegeben ist.
Günstig ist es ebenfalls, die Außenseite der Streuscheibe zu polieren. Dadurch wird ein gutes Führen
des Strichcodelesers gewährleistet, ohne daß die
Unterlage beschädigt wird.

Zeichnung

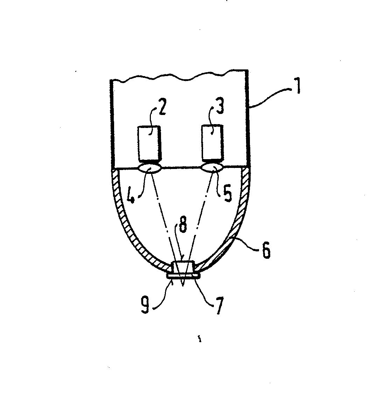

Ein Ausführungsbeispiel der Erfindung ist in der Zeichnung
schematisch dargestellt und in der nachfolgenden Beschreibung näher erläutert.

Beschreibung des Ausführungsbeispiels

Die Figur zeigt den unteren Teil eines Strichcodelesers.

. . .

In einem Gehäuse 1 sind nebeneinander angeordnet ein Sender 2 und ein Empfänger 3 untergebracht. Als Sender 2 findet beispielsweise eine Leuchtdiode, als Empfänger 3 ein Fototransistor Verwendung. Vor dem Sender 2 und dem Empfänger 3 sind Linsen 4 und 5 angebracht, die zur Bündelung des Lichtstrahles dienen. Vor dem Gehäuse ist eine Halbschale 6 vorgesetzt, die so ausgebildet ist, daß sich der Schnittpunkt der Strahlen aus den Linsen 4 und 5 kurz außerhalb der Halbschale treffen. Die Halbschale 6 weist dazu im Bereich des Austritts und Eintritts des Lichtes eine Öffnung auf. Im Bereich des Strahlenganges ist in dieser Öffnung eine Streuscheibe 7 aus lichtdurchlässigem Kunststoff eingesetzt. Die Streuscheibe befindet sich dabei im Lichtausbruch der Halbschale 6. Die streuende Fläche ist auf der Innenseite der Streuscheibe angeordnet, um bei der Benützung des Strichcodelesers einen mechanischen Verschleiß und somit Veränderungen der optischen Funktion zu vermeiden. Die Außenfläche 9 der Streuscheibe 7 hat Kontakt mit der abzutastenden Strichcodeoberfläche und ist poliert. Damit wird gleichzeitig eine Verschmutzung des Lichtausbruches verhindert, so daß ein Selbstreinigungseffekt auftritt. Die Streuung wird durch die Aufrauhung der Innenfläche 8 der Streuscheibe erzielt, wobei die Aufrauhung beispielsweise mittels Schleifpapier erfolgen kann. Zur Erzielung einer möglichst großen Streuung ist es zweckmäßig, eine möglichst hohe Aufrauhung zu wählen. Diese wird jedoch dadurch begrenzt, daß das zurückgesandte optische Signal nicht stark gedämpft werden kann. Außerdem wird durch eine streuende Fläche im Strahlengang das Auflösungsvermögen des Strichcodesensor geringfügig herabgesetzt. Es ist somit ein Kompromiß zwischen Auflösung und Rauhtiefe zu wählen.

R.19151
29.11.1983 Fd/Le

0150494

ROBERT BOSCH GMBH, 7000 STUTTGART 1

_ 4 _

Ansprüche

1. Strichcodeleser mit einem Sender und einem daneben angeordneten Empfänger, mit Linsen vor dem Sender und dem Empfänger und mit einer Halbschale vor dem Empfänger und dem Sender, dadurch gekennzeichnet, daß im Bereich des Strahlendurchtritts der Halbschale (6) eine Streuscheibe (7) angebracht ist.

2. Strichcodeleser nach Anspruch 1, dadurch gekennzeichnet, daß die Streuscheibe (7) einseitig aufgerauht ist.

3. Strichcodeleser nach Anspruch 2, dadurch gekennzeichnet, daß die Aufrauhung auf der Innenseite (8) der Streuscheibe (7) aufgebracht ist.

4. Strichcodeleser nach Anspruch 3, dadurch gekennzeichnet, daß die Außenseite (9) der Streuscheibe (7) poliert ist.